# EUROPÄISCHE PATENTSCHRIFT

(11) **EP 0 616 198 B1**
(45) Veröffentlichungstag und Bekanntmachung des Hinweises auf die Patenterteilung: **22.10.1997**
(21) Anmeldenummer: 94100545.6
(22) Anmeldetag: 15.01.1994
(51) Int. Cl.: G01F 1/66, G01P 5/00

(54) **Durchflussvolumenzähler**
Volume flow sensor
Capteur de débit volumique

(30) Priorität: 19.03.1993 CH 840/93
(43) Veröffentlichungstag der Anmeldung: 21.09.1994
(73) Patentinhaber: Landis & Gyr Technology Innovation AG, 6301 Zug (CH)
(72) Erfinder: Euesemann, Roland, D-61137 Schöneck (DE); Merkel, Jürgen, D-63454 Hanau (DE)
(74) Vertreter: Müller, Hans-Jürgen, Dipl.-Ing.

(56) Entgegenhaltungen:
- EP-A- 0 451 356
- DE-A- 3 734 635
- FR-A- 1 570 610

## Beschreibung

Die Erfindung bezieht sich auf einen Durchflussvolumenzähler gemäss dem Oberbegriff des Anspruchs 1.

Solche Durchflussvolumenzähler werden beispielsweise in Wärmemengenzählern verwendet.

Ein Durchflussvolumenzähler dieser Art ist aus der EP-451 356 A1 bekannt, bei dem die Polarität des Elektrodenpaares des aktiven Teils des einen Messwandlers für Ultraschall oder beider Messwandler an den Anschlüssen vertauschbar ist, um einen kleinen, von der Temperatur des strömenden Mediums abhängigen Messfehler zu vermindern, der durch Reflexionen von Ultraschall im Messwertgebergehäuse verursacht wird.

Die Verarbeitung von Messignalen aus den Messwandlern ist in der DE-PS 37 34 635 C2 beschrieben und die Messwandler selbst sind z.B. aus der CH-PS 642'503 bekannt.

Der Erfindung liegt die Aufgabe zugrunde, einen Durchflussvolumenzähler nach dem Oberbegriff des Anspruchs 1 mit Messwandlern für Ultraschall zu schaffen, dessen von der Temperatur des strömenden Mediums abhängigen Messfehler einfach und kostengünstig eliminierbar ist.

Die genannte Aufgabe wird durch die kennzeichnenden Merkmale des Anspruchs 1 gelöst. Vorteilhafte Ausgestaltungen ergeben sich aus den abhängigen Ansprüchen.

Die Ausführungsbeispiele werden anhand der Zeichnungen näher erläutert.

Es zeigen
- Figur 1:: Ein Blockschaltbild einer Ansteuerung von Messwandlern für Ultraschall,
- Figur 2:: die Ansteuerung in digitaler Technik,
- Figur 3:: ein Arbeitszyklendiagramm und
- Figur 4:: einen Durchflussvolumenzähler mit einer Mikroprozessoransteuerung.

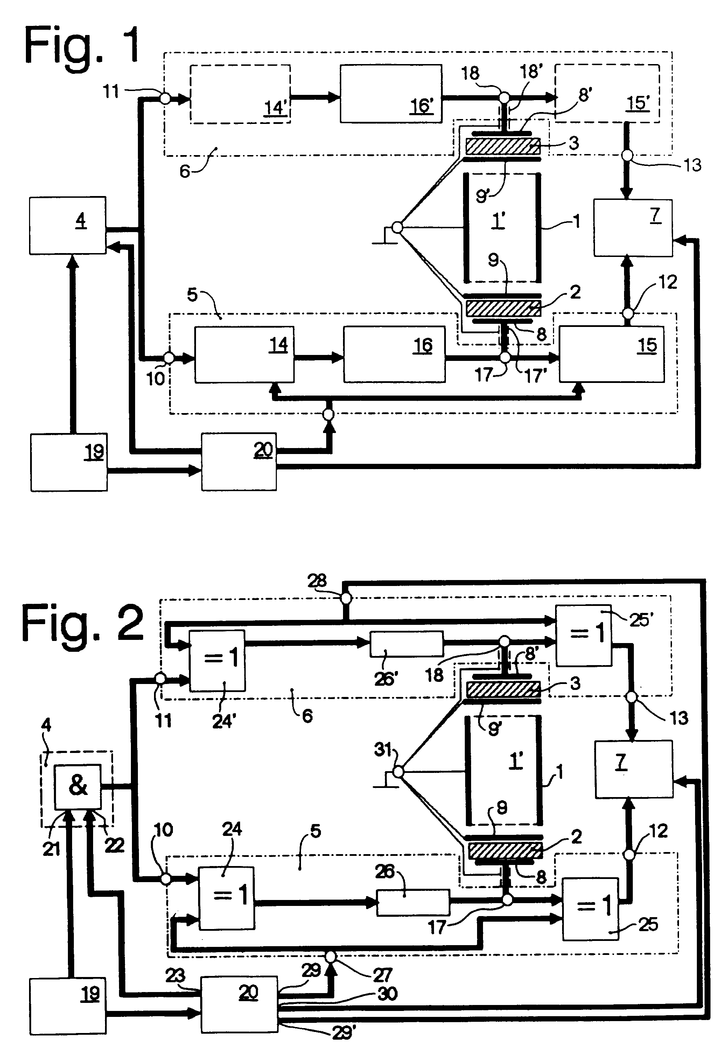

Wichtige Elemente eines Durchflussvolumenzählers auf dem Ultraschallmessprinzip sind in der Figur 1 gezeigt, in der 1 ein Messrohr, 2 und 3 Messwandler für Ultraschall, 4 ein Sendeglied, 5 und 6 Ansteuerzweige und 7 ein Messglied bedeutet. Das Messrohr 1 ist mit einem flüssigen oder gasförmigen Medium 1' erfüllt, das zum Durchströmen des Messrohrs 1 über hier nicht gezeigte Rohrleitungen auf der einen Seite des Messrohrs 1 zuführbar und auf dessen anderen Seite wieder ableitbar ist.

Der Durchflussvolumenzähler arbeitet in aufeinanderfolgenden Arbeitszyklen. Jeder Arbeitszyklus beginnt mit einer Sendephase, die von einer Wartephase mit anschliessender Empfangsphase gefolgt ist. Eine Ruhephase beendet den Arbeitszyklus. Die vier Phasen des Arbeitszyklus weisen je eine vorbestimmte Dauer auf.

Das Messrohr 1 und die Messwandler 2 und 3 sind so auf eine gemeinsame Achse ausgerichtet, dass von den als Sender arbeitenden Messwandler 2, 3 während der Sendephase ausgestrahlten Ultraschallwellen das Medium 1' längs dieser Achse im Messrohr 1 in entgegengesetzter Richtung durcheilen. Die Ultraschallwellen sind in dem dem Sender gegenüberliegenden Messwandler 3 bzw. 2 nach vorbestimmten Laufzeiten empfangbar und in Messignale umwandelbar. Das im Messrohr 1 strömende Medium vergrössert oder verkleinert die Laufzeiten entsprechend der Strömungsrichtung des Mediums 1'. In den Messwandlern 2,3 durch die Ultraschallwellen erzeugte Messignale weisen eine der Strömungsgeschwindigkeit proportionale Laufzeitdifferenz auf, die im Messglied 7 während einer Empfangsphase analysierbar und in Messgrössen umwandelbar ist.

Die Messwandler 2, 3 enthalten in ihrem hier nicht gezeigten Gehäuse als aktiven Teil eine Piezokeramikscheibe, die zwischen einer ersten Elektrode 8 bzw. 8' und einer zweiten Elektrode 9 bzw. 9' angeordnet ist und die durch eine Signalspannung zwischen dem Elektrodenpaar 8, 9 bzw. 8', 9' zum Schwingen anregbar ist. Auftreffende Ultraschallwellen versetzen die Piezokeramikscheibe in mechanische Schwingungen, wobei am Elektrodenpaar 8, 9 bzw. 8', 9' die Messignale erzeugt werden. Die Abmessungen der Piezokeramikscheibe bestimmen die Frequenz der Signalspannung, welche vorzugsweise im Bereich von 0,3 MHz bis 3 MHz gewählt wird. Bekannte Durchflussvolumenzähler arbeiten bei einer Frequenz von etwa 1 MHz, was einen guten Kompromiss zwischen der Genauigkeit des Durchflussvolumenzählers, der mechanischen Festigkeit der Piezokeramikscheibe und der Verwendbarkeit kostengünstiger elektronischer Bauteile darstellt.

Eine Sendesignalleitung führt parallel vom Ausgang des Sendeglieds 4 zu einer ersten Eingangsklemme 10 des ersten Ansteuerzweigs 5 und zu einer zweiten Eingangsklemme 11 des zweiten Ansteuerzweiges 6. Getrennte Messleitungen verbinden eine erste Ausgangsklemme 12 des ersten Ansteuerzweiges 5 und eine zweite Ausgangsklemme 13 des zweiten Ansteuerzweiges 6 auf getrennte Messeingänge des Messglieds 7.

Der erste Ansteuerzweig 5 umfasst zwei Phasenschieber 14, 15 und ein Ankoppelglied 16. Die Eingangsklemme 10 ist auf den Signaleingang des ersten Phasenschiebers 14 geführt, der zum Aufprägen einer Phasenverschiebung α auf das Sendesignal dient und dessen Ausgang über das Ankoppelglied 16 mit dem Signaleingang des zweiten Phasenschiebers 15 verbunden ist. Der zweite Phasenschieber 15 verschiebt die Phase des Messignals vom ersten Messwandler 2 um den Wert β. Der Ausgang des zweiten Phasenschiebers 15 ist als Ausgangsklemme 12 bezeichnet. Ein erster Abgriff 17 am Ausgang des Ankoppelglieds 16 steht über eine abgeschirmte Leitung 17' mit der ersten Elektrode 8 des ersten Messwandlers 2 in Verbindung. Die zweite Elektrode 9 und der Schirm der Leitung 17' sind mit Vorteil geerdet, um allfällige Störsignale zu unterdrücken. Vorzugsweise weisen beide Phasenschieber 14 und 15 eine gleiche Signalverzögerung und eine gleiche Phasenverschiebung α und β auf, also α = β .

Die Phasenschieber 14, 15 sind so eingerichtet, dass sie ein Steuersignal eines Steuerglieds 20 an ihrem Steuereingang empfangen können und durch das Steuersignal vorbestimmte Werte α und β der Phasenverschiebung eingestellt werden können, ohne dass sich die Signallaufzeit durch den Phasenschieber 14 bzw. 15 ändert. Beispielsweise ist der Wert α, β der Phasenverschiebung zwischen dem Wert 0° und einem andern vorbestimmten Wert umschaltbar.

Das Ankoppelglied 16 dient der Impedanzanpassung eines hier nicht gezeigten Verstärkers, der beispielsweise am Ausgang des ersten Phasenschiebers 14 vor dem Ankoppelglied 16 angeordnet ist und als Teil des Ankoppelglieds 16 aufgefasst werden kann, an den Messwandler 2, damit das verstärkte Sendesignal durch die Messwandler 2 optimal in Ultraschallwellen umwandelbar ist.

Der zweite Ansteuerzweig 6 enthält wengistens ein Ankoppelglied 16', das genau gleich aufgebaut ist, wie das Ankoppelglied 16 im ersten Ansteuerzweig 5. Das Sendesignal von der Eingangsklemme 11 gelangt über die Elemente des zweiten Ansteuerzweiges 6 zur Ausgangsklemme 13. Der Ausgang des Ankoppelglieds 16' ist in Verbindung mit einem zweiten Abgriff 18, der über eine abgeschirmte Leitung 18' mit der ersten Elektrode 8' des zweiten Messwandlers 3 verbunden ist. Sowohl die zweite Elektrode 9' und der Schirm der Leitung 18' sind vorzugsweise geerdet, wobei das Messrohr 1 bzw. dessen Gehäuse das Referenz- oder Erdpotential aufweisen.

Mit Vorteil ist der zweite Ansteuerzweig 6 exakt gleich aufgebaut wie der erste Ansteuerzweig 5, damit beide Ansteuerzweige 5, 6 gleiche Laufzeiten für die vom Sendeglied 4 erzeugten Signale und für die Messignale aufweisen. Die beiden in der Zeichnung der Figur 1 gestrichelt gezeichneten und nur als Option eingesetzten Phasenschieber 14' und 15' sind z.B. auf einen fest vorbestimmten Wert α' und β' der Phasenverschiebung eingestellt.

Ein Oszillator 19 speist das Sendeglied 4 und das Steuerglied 20 mit einem Hochfrequenzsignal. Das Sendeglied 4 erzeugt daraus das Sendesignal mit der von den Messwandlern 2, 3 vorbestimmten Frequenz, während im Steuerglied 20 eine an sich bekannte Zählkette eingerichtet ist, die synchron zum Sendesignal die Folge der Arbeitszyklen mit den Sende- und Empfangsphasen aus dem Hochfrequenzsignal des Oszillators 19 ableitet.

Das Steuerglied 20 weist Steuerausgänge auf, die über Leitungen zum Übermitteln der Steuersignale mit einem Eingang des Sendeglieds 4 und des Messglieds 7 sowie mit den Steuereingängen wenigstens der Phasenschieber 14 und 15 des ersten Ansteuerzweiges 5 verbunden sind.

Die Arbeitszyklen des Durchflussvolumenzählers unterscheiden sich in der Phasenverschiebung α, β bzw. α', β' der Phasenschieber 14, 15 bzw. 14', 15'. Beispielhaft sind in einem ersten Arbeitszyklus die Werte für die Phasenverschiebungen gleich 0°. Nur während der Sendephase gibt das Sendeglied 4 das aus dem Hochfrequenzsignal erzeugte phasengleiche Sendesignal auf die Eingangsklemmen 10 und 11 ab. Nach der Verzögerung im ersten Phasenschieber 14 bzw. 14' und dem Ankoppelglied 16 bzw. 16' treffen die verstärkten Sendesignale über den Abgriff 17 bzw. 18 an der ersten Elektrode 8 bzw. 8' des Messwandlers 2 bzw. 3 ein und versetzen die Scheiben aus Piezokeramik so in Schwingungen, dass in das Medium 1' im Messrohr 1 die Ultraschallwellen in Phase abgestrahlt werden. Nach einer vorbestimmten Anzahl Perioden beendet das Steuerglied 20 die Sendephase und leitet nach der vorbestimmten Wartephase die Empfangsphase ein.

In der Zwischenzeit sind die während der Sendephase ausgesandten Ultraschallwellen am gegenüberliegenden Messwandler 2 bzw. 3 eingetroffen und erzeugen dort die beiden Messignale, die über die zweiten Phasenschieber 15, 15' an den Ausgangsklemmen 12, 13 erscheinen und von dort zum Messglied 7 geleitet werden. Die beiden Messeingänge des Messglieds 7 sind durch das vom Steuerglied 20 empfangene Freigabesignal nur in der Empfangsphase während einer vorbestimmten Anzahl Perioden des Messignals geöffnet. Die weitere Verarbeitung der beiden Messignale im Messglied 7 bis zu den vorbestimmten Messgrössen beschreibt die eingangs erwähnte DE-PS 37 34 635 C2.

Die Länge der Ruhepause bestimmt die mittlere Leistungsaufnahme des Durchflussvolumenzählers. Beispielhaft beträgt die Ruhepause bei den aus einer Batterie gespeisten Geräten etwa 1 Sekunde.

Nach der Ruhepause beginnt der zweite Arbeitszyklus, wobei das Steuerglied 20 zuerst die beiden Phasenschieber 14 und 15 im ersten Ansteuerzweig 5 auf einen vorbestimmten Wert α und β der Phasenverschiebung einstellt. Anschliessend folgen sich wie im ersten Arbeitszyklus die Sende- und Empfangsphase mit dem Unterschied, dass die Phase der Ultraschallwellen des ersten Messwandlers 2 gegen diejenigen aus dem zweiten Messwandler 3 um den vorbestimmten Wert α verschoben sind. Zum Ausgleich erfahren die im Messwandler 2 erzeugten Messignale nach dem Abgriff 17 eine Phasenverschiebung β im zweiten Phasenschieber 15. Falls α = β > 0 ist, sind die Messignale an den Messeingängen des Messglieds 7 gerade in Phase, wenn das Medium im Messrohr 1 ruhend ist. Eine allfällig verbleibende Phasendifferenz der Messignale ist durch eine Strömung des Mediums im Messrohr 1 verursacht. Das Messglied 7 gewinnt aus dieser verbleibenden Phasendifferenz die Information über die Strömungsgeschwindigkeit des Mediums 1'.

Die in der DE-PS 37 34 635 C2 beschriebene Korrektur zum Unterdrücken von Schwappmengen mittels einer zusätzlichen Phasenverschiebung δα kann durch entsprechende Wahl der Werte für α, β in den Ansteuerzweigen 5, 6 integriert werden.

Die folgenden ungeraden Arbeitszyklen weisen wie der erste Arbeitszyklus in den Phasenschiebern 14, 15 die Phasenverschiebung α = β = 0° auf, während die geraden Arbeitszyklen dem zweiten Arbeitszyklus entsprechen und in den Phasenschiebern 14, 15 die Phasenverschiebung α und β aufweisen.

Der Fachmann kann ohne weiteres die Abfolge und die Anzahl der Arbeitszyklen mit verschiedenen Werten α, α', β und β' der Phasenverschiebung verändern. Als Massstab dient die Ausmittlung von durch Unsymmetrien der Messwandler 2, 3 verursachten temperaturabhängigen Messfehlern. Vorzugswerte für die Phasenverschiebung sind α = α' = β = β' = 0 und α = β = 180°. Der Fachmann kann auch andere Werte α, β aus dem Bereich 0° und 360° wählen.

Der Durchflussvolumenzähler weist den Vorteil auf, dass die dem Medium 1' zugewandten zweiten Elektroden 9, 9' unabhängig von der vorgewählten Phasenverschiebungen das gleiche elektrische Potential wie das Messrohr 1 bzw. das ihn umschliessende Messwertgebergehäuse aufweisen. Dadurch entfallen aufwendige Isolationen zwischen dem Messrohrgehäuse und den zweiten Elektroden 9, 9'. Dies erhöht die elektronische Störsicherheit der Messeinrichtung und die Unterdrückung der nach aussen wirkenden Störstrahlung.

Mit Vorteil weisen die Phasenschieber 14, 15 eine Einrichtung auf, damit auch der Wert α, β der Phasenverschiebung in der Abfolge der Arbeitszyklen durch das Steuerglied 20 bei beiden Phasenschiebern 14, 15 gleichzeitig im Bereich 0° ≤ α = β ≤ 180° veränderbar ist, um die Unsymmetrien der Messwandler 2, 3 besser zu kompensieren. Das Steuerglied 20 übermittelt in diesem Fall nicht nur das Steuersignal zum Ein-und Ausschalten sondern auch eine Information über den Wert a der Phasenverschiebung.

Eine Vielzahl von fest vorgewählten Werten α, β zwischen 0° und 360° bilden einen Wertevorrat {W₁, W₂, ...}, aus dem vom Steuerglied 20 in einer vorbestimmten Folge die Werte für die Phasenverschiebungen α, β entnimmt, die in den aufeinanderfolgenden Arbeitszyklen wirksam sind.

Sind die Phasenschieber 14', 15' des zweiten Ansteuerzweiges 6 ebenfalls mit einem Steuerausgang des Steuerglieds 20 verbunden, sind ihre Phasenverschiebungen α', β' und im ersten Ansteuerzweig 5 die Phasenverschiebungen α, β der Phasenschieber 14, 15 unabhängig voneinander oder zusammen veränderbar.

Mit Vorteil ist eine Summe aus der Phasenverschiebung α im ersten Phasenschieber 14 des ersten Ansteuerzweiges 5 und der Phasenverschiebung β' im zweiten Phasenschieber 15' des zweiten Ansteuerzweiges 6 modulo 2π gleich der Summe aus der Phasenverschiebung α' im ersten Phasenschieber 14' des zweiten Ansteuerzweiges 6 und der Phasenverschiebung β im zweiten Phasenschieber 15 des ersten Ansteuerzweiges 5.

Die Bauteile, wie das Sendeglied 4, die Ansteuerzweige 5, 6, das Messglied 7 und der Oszillator 19 sind in analoger oder digitaler Technik oder in gemischter Technik ausführbar.

In der Figur 2 ist eine einfache und kostengünstige elektronische Schaltung für den Durchflussvolumenzähler in digitaler Technik gezeigt, wobei die Phasenverschiebung α, α', β, β' zwischen den festen Werten 0° und 180° umschaltbar ist, wobei α = β und α' = β' ist.

Das Sendeglied 4 ist ein einfaches AND-Tor mit einem Hochfrequenzeingang 21 und einem Freigabeeingang 22. Der Oszillator 19 erzeugt als Hochfrequenzsignal ein Rechtecksignal, das an den Hochfrequenzeingang 21 abgegeben wird und eine von den Messwandlern 2, 3 vorbestimmte Frequenz aufweist. Der Freigabeeingang 22 ist mit einem Sendefreigabeausgang 23 des Steuerglieds 20 verbunden. Solange der Freigabeeingang 22 ein Freigabesignal mit logisch "1" (HIGH) erhält, erscheint am Ausgang des Sendeglieds 4 das Hochfrequenzsignal als Sendesignal, das auf die Eingangsklemmen 10 und 11 geleitet wird.

Die beiden Ansteuerzweige 5 und 6 sind in identischer Weise aufgebaut. Als Phasenschieber dienen im ersten Ansteuerzweig 5 zwei "Exclusive-OR"-(EXOR-) Gatter 24 und 25 bzw. im zweiten Ansteuerzweig 6 die beiden EXOR-Gatter 24' und 25'. Je ein Speisewiderstand 26 bzw. 26' zwischen dem Ausgang des ersten EXOR-Gatters 24 bzw. 24' passt die Impedanz des Messwandlers 2 bzw. 3 an den Ausgang des EXOR-Gatters 24 bzw. 24' an. Beispielhaft ist der erste Ansteuerzweig 5 beschrieben. Die Eingangsklemme 10 ist auf den einen Eingang des ersten EXOR-Gatters 24 geführt. Der Speisewiderstand 26 verbindet den Ausgang des ersten EXOR-Gatters 24 mit dem ersten Abgriff 17, der mit dem einen Eingang des zweiten EXOR-Gatters 25 verbunden ist. Die beiden anderen Eingänge der EXOR-Gatter 24 und 25 sind gemeinsam auf eine erste Steuerklemme 27 geführt. Die Ausgangsklemme 12 bildet den Ausgang des zweiten EXOR-Gatters 25.

Die beiden EXOR-Gatter 24 und 25 wirken als Phasenschieber 14 (Figur 1) und 15 (Figur 1). Mit dem Steuersignal an der ersten Steuerklemme 27 ist die Phasenverschiebung α, β zwischen den Werten 0° und 180° umschaltbar, wobei in den EXOR-Gattern 24, 25 die Phasenverschiebung α = β = 0° beträgt, wenn das Steuersignal an der Steuerklemme 27 auf logisch "0" (LOW) ist. Hingegen erleidet das Sendesignal bzw. das Messignal beim Durchgang durch das EXOR-Gatter 24 bzw. 25 eine Phasenverschiebung α = β = 180° , solange das Steuersignal auf logisch "1" (HIGH) gelegt ist.

Der zweite Ansteuerzweig 6 weist eine zweite Steuerklemme 28 zur Steuerung der Phasenverschiebung α', β' in den beiden EXOR-Gattern 24' und 25' auf, die mit je einem der Eingänge der beiden EXOR-Gatter 24' und 25' verbunden ist. Die Phasenverschiebung α', β' kann genau gleich wie im ersten Ansteuerzweig 5 mit dem Steuersignal an der zweiten Steuerklemme 28 zwischen den Werten 0° und 180° umgeschaltet werden.

Die beiden ersten EXOR-Gatter 24, 24' sind beispielsweise mit einer Ausgangsstufe genügender Leistung ausgerüstet, um das Sendesignal in Rechteckform über der Serieschaltung aus dem Speisewiderstand 26 bzw. 26' und dem Messwandler 2 bzw. 3 zu erzeugen. Da die Impedanz der Messwandler 2, 3 komplex ist, verformt sich das rechteckförmige Sendesignal nach dem Speisewiderstand 26 bzw. 26' am Abgriff 17 bzw. 18, so dass die im Messrohr 1 erzeugten Ultraschallwellen im wesentlichen nur die Grundfrequenz aufweisen, da deren Oberwellengehalt stark gedämpft ist.

Neben dem Sendefreigabeausgang 23 weist das Steuerglied 20 wenigstens einen Steuersignalausgang 29 und einen Empfangsfreigabeausgang 30 auf. Der Steuersignalausgang 29 ist mit der ersten Steuerklemme 27 verbunden.

Die zweite Steuerklemme 28 kann beispielsweise auf den ersten Steuersignalausgang 29 geführt sein. Die zweite Steuerklemme 28 kann in einer anderen Ausführung auf einen zweiten Steuersignalausgang 29' oder auch direkt fest mit einem Erdpotentialpunkt 31 verbunden sein. Das Erdpotential entspricht der Signalspannung für logisch "0" (LOW).

Die Zählkette des Steuerglieds 20 erzeugt durch Abzählen der vom Oszillator 19 zugeführten Hochfrequenzsignale die vorbestimmten Steuersignale an den Steuerausgängen 23, 29, 29' und 30.

Beispielhaft kann die Länge der Sendephase 100 Perioden des Sendesignals bzw. des Hochfrequenzsignals betragen. An die Sendephase schliesst sich die Wartephase und die Empfangsphase von je 40 Sendesignalperioden an. Die Ruhephase verlängert den ganzen Arbeitszyklus genau auf eine ganze Sekunde.

Selbstverständlich sind andere Periodenzahlen verwendbar, insbesondere diejenigen, die im Dualsystem in der Form 2^{N} einfach darstellbar sind, wobei die Dauer der Warte- und Empfangsphase auf die Länge des Messrohrs 1 und der Sendephase sowie auf die Schallgeschwindigkeit im Medium 1' abgestimmt sein muss.

Das Steuersignal am Steuerfreigabeausgang 23 ist nur während der Sendephase und dasjenige am Empfangsfreigabeausgang 30 nur während der Empfangsphase auf logisch "1" (HIGH). Während der restlichen Dauer des Arbeitszyklus sind beide Ausgänge 23 und 30 auf logisch "0" (LOW).

Bei den aufeinanderfolgenden Arbeitszyklen weisen die Steuerklemmen 27, 28 nach einem vorbestimmten Muster wechselnde Steuersignale auf:
a) Im zweiten Ansteuerzweig 6 ist die Phasenverschiebung unabhängig vom Arbeitszyklus in beiden EXOR-Gattern 24', 25' gleich gross, also α' = β' = konstanter Wert. Die zweite Steuerklemme 28 ist fest auf logisch "0" mit dem Erdpotentialpunkt 31 verbunden. Das Steuersignal kann aber auch am Steuersignalausgang 29' vom Arbeitszyklus unabhängig fest auf logisch "0" gehalten sein. Mit den Arbeitszyklen AN ändert sich nur das Steuersignal an der ersten Steuerklemme 27. Beispielhaft kann das Steuerglied 20 die erste Steuerklemme 27 auf logisch "0" bei ungeraden Arbeitszyklen und auf logisch "1" bei geraden Arbeitszyklen legen. Bei den ungeraden Arbeitzyklen werden die Sende- und Messignale im ersten Ansteuerzweig 5 nicht phasenverschoben, da α = β = 0° ist. Bei den geraden Arbeitszyklen erleidet das Sendesignal im ersten EXOR-Gatter 24 die Phasenverschiebung α = 180°, so dass die im ersten Messwandler 2 erzeugten Ultraschallwellen im Vergleich zu den aus dem zweiten Messwandler 3 kommenden Ultraschallwellen um 180° phasenverschoben sind. Das im ersten Messwandler 2 erzeugte Messignal wird zur Kompensation im zweiten EXOR-Gatter 25 des ersten Ansteuerzweiges 5 um β = 180° phasenverschoben.
   Es ist auch denkbar, die zweite Steuerklemme 28 auch fest auf den Spannungspegel für logisch "1" zu legen, so dass im zweiten Ansteuerzweig 6 die Phasenverschiebung α' = β' = 180° ist.
   Dieser Durchflussvolumenzähler arbeitet, wie wenn nach jedem Arbeitszyklus am ersten Messwandler 2 die Elektroden 8, 9 physisch durch Polaritätsumkehr vertauscht würden. Diese Anordnung weist den Vorteil auf, dass die zweiten Elektroden 9, 9', im Gegensatz zu der in der eingangs erwähnten EP-451'356 beschriebenen Anordnung, immer auf den Erdpotentialpunkt 31 geschaltet sind, so dass im Betrieb keine durch die Umkehr der Polarität auftretende Isolations- und Störprobleme auftreten und dadurch eine kostengünstige Anordnung erreichbar ist.
b) Die Phasenverschiebung kann in den beiden Ansteuerzweigen 5, 6 gleichzeitig veränderbar sein, wenn beide Steuerklemmen 27, 28 gemeinsam auf den Steuersignalausgang 29 geführt sind. Das Steuersignal wechselt bei aufeinanderfolgenden Arbeitszyklen zwischen logisch "0" und "1". Diese Anordnung entspricht derjenigen in der eingangs erwähnten EP-451'356 mit der gleichzeitigen Polaritätsumkehr bei beiden Elektrodenpaaren 8, 9 und 8', 9' der Messwandler 2 und 3.
c) Bei einer wie in der Zeichnung der Figur 2 dargestellten unabhängigen Verbindung zwischen der zweiten Steuerklemme 28 zu einem zweiten Steuerausgang 29', kann die Polarität der beiden Messwandler 2, 3 unabhängig voneinander gewechselt werden.

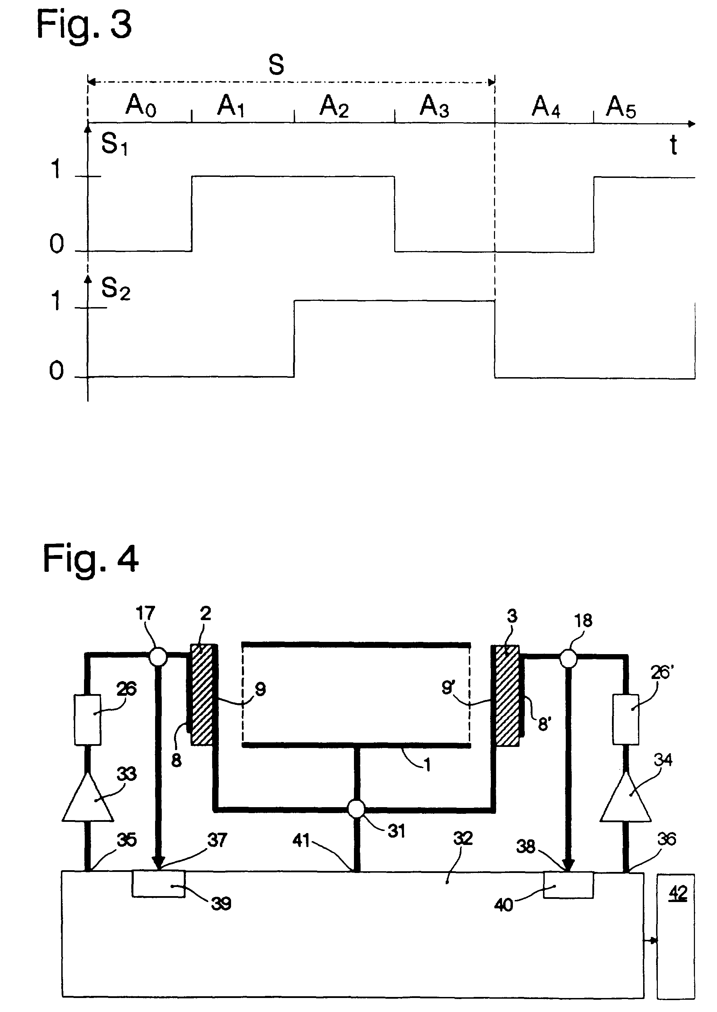

Im Diagramm der Figur 3 ist beispielhaft eine Sequenz S von Arbeitszyklen A₀, A₁, A₂, A₃ usw. als Funktion der Periodenzahl des Hochfrequenzsignals bzw. der Zeit t dargestellt. S₁ ist das Steuersignal an der ersten Steuerklemme 27 (Figur 2) und S₂ dasjenige an der zweiten Steuerklemme 28 (Figur 2). Das Steuersignal S₁ wird zu Beginn des ersten Arbeitszyklus A₁ von logisch "0" auf logisch "1" umgeschaltet und am Ende des zweiten Arbeitszyklus A₂ wieder auf logisch "0" zurückgenommen. Das Steuersignal S₂ ist um die Dauer eines Arbeitszyklus in der Zeit t verschoben, so dass das Steuersignal S₂ während den Arbeitszyklen A₂ und A₃ auf logisch "1" ist. Ab Arbeitszyklus A₄ wiederholt sich die Sequenz S der Arbeitszyklen A₀-A₃.

Die Anzahl N der Arbeitszyklen A_{N} in der Sequenz S ist durch Anpassungen in der Zählkette des Steuerglieds 20 (Figur 2) frei wählbar und praktisch nur durch den erhöhten Aufwand in der Zählkette begrenzt.

In der Figur 4 ist die Ansteuerung der Messwandler 2, 3 durch die Verwendung eines programmierten Mikroprozessors 32 schaltungstechnisch stark vereinfacht. Die Funktionen der in der Figur 2 gezeigten logischen Elemente, das Sendeglied 4, das Messglied 7, der Oszillator 19, das Steuerglied 20 und die EXOR-Gatter 24, 24', 25, 25', sind in der Figur 4 mit Vorteil vom Mikroprozessor 32 übernommen, so dass die Sequenz S (Figur 3) der Arbeitszyklen A_{N} leicht veränderbar im Programm festgelegt ist.

Zwei externe Verstärker 33 und 34 zum Verstärken des Sendesignals der beiden Ansteuerzweige 5 (Figur 2) und 6 (Figur 2) sind mit ihrem Eingang an einen der beiden digitalen Sendesignal-Ausgänge 35, 36 des Mikroprozessors 32 angeschlossen. Der Ausgang jedes Verstärkers 33 bzw. 34 ist über den Speisewiderstand 26 bzw. 26' mit dem Abgriff 17 bzw. 18 verbunden. Von jedem Abgriff 17 bzw. 18 führen Leitungen sowohl zur ersten Elektrode 8 bzw. 8' als auch zu einer Messignal-Eingangsklemme 37 bzw. 38 des Mikroprozessors 32. Mit Vorteil weisen die Messignaleingänge 37, 38 präzise Schmitt-Trigger-Eingänge 39, 40 auf, damit in beiden Ansteuerzweigen 5 und 6 die Laufzeiten jitterfrei bestimmbar sind. Das Messrohr 1, die zweiten Elektroden 9, 9' und ein Referenzanschluss 41 des Mikroprozessors 32 sind mit dem Erdpotentialpunkt 31 fest verbunden.

Zwischen einer ersten Summe, die aus der Phasenverschiebung α im ersten EXOR-Gatter 24 des ersten Ansteuerzweiges 5 und der Phasenverschiebung β' im zweiten EXOR-Gatter 25' des zweiten Ansteuerzweiges 6 gebildet ist, und einer zweiten Summe, die gleich der Phasenverschiebung α' im ersten EXOR-Gatter 24' des zweiten Ansteuerzweiges 6 und der Phasenverschiebung β im zweiten EXOR-Gatter 25 des ersten Ansteuerzweiges 5 ist, ist eine Phasendifferenz PD berechenbar. Jeder Arbeitszyklus weist als Bedingung einen vorbestimmten Wert der Phasendifferenz PD von modulo 2π gleich δα auf, wobei δα die zusätzliche Phasenverschiebung ist, die gemäss der DE-PS 37 34 635 C2 als Korrektur zum Unterdrücken von Schwappmengen im Rohrsystem des Mediums 1' (Figur 1) dient und beispielsweise aus dem Bereich 5° ≤ δα ≤ 60° gewählt ist. Wird auf diese Korrektur verzichtet, ist die zusätzliche Phasenverschiebung δα = 0 zu setzen.

Der Vorteil der Schaltung mit dem Mikroprozessor 32 ist die freie Programmierbarkeit der Sequenz S der Arbeitszyklen A_{N}, wobei die Zahl der Arbeitszyklen A_{N} für eine vorbestimmte Kombination der Werte für die vier Phasenverschiebungen α, α', β und β' aus dem Wertevorrat {0°, 180°} wählbar ist.

Die Taktfrequenz des Mikroprozessors 32 ist mit Vorteil ein ganzzahliges Vielfaches N der Frequenz des Sendesignals, das an den Sendesignal-Ausgängen 35, 36 abgegeben wird, da im Gegensatz zu der Schaltung in der Figur 2 der Wertebereich für die Phasenverschiebungen α, α', β und β' vom Wertevorrat {0°, 180°} auf Werte in Schritten von 180°/N zwischen 0° und 180° erweitert wird und im Mikroprozessor 32 die zur Korrektur der Schwappmengen verwendete zusätzliche Phasenverschiebung δα rein digital erzeugt werden kann.

Eine Anzeige 42 oder ein Registriergerät ist mit einem Ausgang des Mikroprozessors 32 verbunden, um eine Weiterverarbeitung der Messwerte zu ermöglichen.

## Patentansprüche

1. Durchflussvolumenzähler für flüssige oder gasförmige Medien (1') mit einer Ultraschallmessstrecke in einem Messrohr (1) zwischen zwei Messwandlern (2, 3) für Ultraschall, einem Oszillator (19) zum Erzeugen eines Hochfrequenzsignals für ein Sendeglied (4) und für ein Steuerglied (20) zum Erzeugen von Sequenzen S aufeinander folgender Arbeitszyklen A_{N} sowie zwischen dem Sendeglied (4) und einem Messglied (7) zwei parallel geschalteten Ansteuerzweigen (5; 6) für die an Abgriffen (17; 18) der Ansteuerzweigen (5; 6) angeschlossenen Messwandler (2; 3), dadurch gekennzeichnet,
dass wenigstens einer der Ansteuerzweige (5 bzw. 6) zusätzlich zu einem Ankoppelglied (16; 26 bzw. 16'; 26') für den Messwandler (2 bzw. 3) zwei vom Steuerglied (20) steuerbare Phasenschieber (14; 15; 24; 25 bzw. 14'; 15'; 24'; 25') aufweist,
dass ein erster dieser Phasenschieber (14; 24 bzw. 14'; 24') zum Aufprägen einer durch den Arbeitszyklus A_{N} vorbestimmten ersten Phasenverschiebung α bzw. α' auf ein vom Sendeglied (4) aus dem Hochfrequenzsignal erzeugtes Sendesignal zwischen dem Sendeglied (4) und dem Abgriff (17 bzw. 18) angeordnet ist und
dass ein zweiter dieser Phasenschieber (15; 25 bzw. 15'; 25') zum Erzeugen einer durch den Arbeitszyklus A_{N} vorbestimmten zweiten Phasenverschiebung β bzw. β' auf ein vom Messwandler (2 bzw. 3) abgegebenes Messignal zwischen dem Abgriff (17 bzw. 18) und einem der beiden Messignaleingänge des Messglieds (7) eingeschaltet ist.

2. Durchflussvolumenzähler nach Anspruch 1, dadurch gekennzeichnet, dass in beiden Ansteuerzweigen (5; 6) je ein erster Phasenschieber (14; 14'; 24; 24') und je ein zweiter Phasenschieber (15; 15'; 25; 25') angeordnet sind und dass die Summe aus der Phasenverschiebung α im ersten Phasenschieber (14; 24) des ersten Ansteuerzweiges (5) und der Phasenverschiebung β' im zweiten Phasenschieber (15'; 25') des zweiten Ansteuerzweiges (6) modulo 2π gleich ist der Summe aus der Phasenverschiebung α' im ersten Phasenschieber (14'; 24') des zweiten Ansteuerzweiges (6) und der Phasenverschiebung β im zweiten Phasenschieber (15; 25) des ersten Ansteuerzweiges (5).

3. Durchflussvolumenzähler nach Anspruch 1, dadurch gekennzeichnet, dass die beiden Phasenschieber (14; 15; 24; 25 bzw. 14'; 15'; 24'; 25') im gleichen Ansteuerzweig (5 bzw. 6) jeweils den gleichen, vom Arbeitszyklus AN vorbestimmten Wert α = β bzw. α' = β' der Phasenverschiebung aufweisen.

4. Durchflussvolumenzähler nach Anspruch 3, dadurch gekennzeichnet, dass in einem der beiden Ansteuerzweige (5 bzw. 6) die beiden Phasenschieber (14; 15; 24; 25 bzw. 14'; 15'; 24'; 25') in allen Arbeitszyklen den gleichen vorbestimmten Wert α = ß bzw. α' = β' der Phasenverschiebung aufweisen.

5. Durchflussvolumenzähler nach Anspruch 1, dadurch gekennzeichnet, dass die Sendesignale in den beiden ersten Phasenschiebern (14; 14' bzw. 24; 24') und die Messignale in den beiden zweiten Phasenschiebern (15; 15'; 25; 25') die gleiche Phasenverschiebung mit den Werten α = α' und β = β' erleiden.

6. Durchflussvolumenzähler nach Anspruch 1, dadurch gekennzeichnet, dass die Sequenz S einen Wertevorrat aus dem Bereich von 0° bis 360° für die Phasenverschiebungen α, α', β, β' der Phasenschieber (14; 14'; 15; 15'; 24; 24'; 25; 25') umfasst.

7. Durchflussvolumenzähler nach Anspruch 6, dadurch gekennzeichnet, dass der Wertevorrat die beiden Werte 0° und 180° für die Phasenverschiebungen α, α', β, β' der Phasenschieber (14; 14'; 15; 15'; 24; 24'; 25; 25') umfasst.

8. Durchflussvolumenzähler nach Anspruch 7, dadurch gekennzeichnet, dass die Phasenschieber (14; 14'; 15; 15') durch EXOR-Gatter (24; 24'; 25; 25') gebildet sind.

9. Durchflussvolumenzähler nach einem der Ansprüche 1 bis 8, dadurch gekennzeichnet, dass das Sendeglied (4), das Messglied (7), der Oszillator (19), das Steuerglied (20) und die Phasenschieber (14; 14'; 15; 15') bzw. die EXOR-Gatter (24; 24'; 25; 25') durch Programmieren in einem Mikroprozessor (32) nachgebildet sind.

## Claims

1. A volume flow meter for liquid or gaseous media (1') having an ultrasonic measurement section in a measurement tube (1) between two measurement transducers (2, 3) for ultrasound, an oscillator (19) for producing a high frequency signal for a transmitter member (4) and for a control member (20) for producing sequences S of successive working cycles A_{N} and between the transmitter member (4) and a measurement member (7) two parallel-connected actuation branches (5; 6) for the measurement transducers (2; 3) which are connected to tappings (17; 18) of the actuation branches (5 ;6), characterised in that
at least one of the actuation branches (5 or 6) has in addition to a coupling member (16; 26 or 16'; 26' respectively) for the measurement transducer (2 or 3 respectively) two phase shifters (14; 15; 24; 25 or 14'; 15'; 24' 25') controllable by the control member (20),
a first of said phase shifters (14; 24 or 14'; 24') is arranged between the transmitter member (4) and the tapping (17 or 18 respectively) for impressing a first phase shift α or α' which is predetermined by the working cycle A_{N} onto a transmitter signal produced by the transmitter member (4) from the high frequency signal, and
a second of said phase shifters (15; 25 or 15'; 25';) is connected between the tapping (17 or 18) and one of the two measurement signal inputs of the measurement member (7) for producing a second phase shift β or β' which is predetermined by the working cycle A_{N} on a measurement signal outputted by the measurement transducer (2 or 3).

2. A volume flow meter according to claim 1 characterised in that a respective first phase shifter (14; 14'; 24; 24') and a respective second phase shifter (15; 15'; 25; 25') are arranged in each of the two actuation branches (5; 6) and that the sum of the phase shift α in the first phase shifter (14; 24) of the first actuation branch (5) and the phase shift β' in the second phase shifter (15'; 25') of the second actuation branch (6) is modulo 2π equal to the sum of the phase shift α' in the first phase shifter (14'; 24') of the second actuation branch (6) and the phase shift β in the second phase shifter (15; 15) of the first actuation branch (5).

3. A volume flow meter according to claim 1 characterised in that the two phase shifters (14; 15; 24; 25 or 14'; 15'; 24'; 25') in the same actuation branch (5 or 6 respectively) respectively have the same value α = β or α' = β' of the phase shift, which is predetermined by the working cycle A_{N}.

4. A volume flow meter according to claim 3 characterised in that in one of the two actuation branches (5 or 6) the two phase shifters (14; 15; 24; 25 or 14'; 15'; 24'; 25') have in all working cycles the same predetermined value α = β or α' = β' of the phase shift.

5. A volume flow meter according to claim 1 characterised in that the transmitter signals in the two first phase shifters (14; 14' or 24; 24') and the measurement signals in the two second phase shifters (15; 15'; 25; 25') experience the same phase shift with the values α = α' and β = β'.

6. A volume flow meter according to claim 1 characterised in that the sequence S includes a value supply from the range of 0° to 360° for the phase shifts α, α', β, β' of the phase shifters (14; 14'; 15; 15'; 24; 24' 25; 25').

7. A volume flow meter according to claim 6 characterised in that the value supply includes the two values 0° and 180° for the phase shifts α, α', β, β' of the phase shifters (14; 14'; 15; 15'; 24; 24' 25; 25').

8. A volume flow meter according to claim 7 characterised in that the phase shifters (14; 14'; 15; 15') are formed by EXOR-gates (24; 24'; 25; 25').

9. A volume flow meter according to one of claims 1 to 8 characterised in that the transmitter member (4), the measurement member (7), the oscillator (19), the control member (20) and the phase shifters (14; 14'; 15; 15') or the EXOR-gates (24; 24'; 25; 25') are simulated by programming in a microprocessor (32).

## Revendications

1. Débitmètre volumétrique pour milieux liquides ou gazeux (1') comportant une section de mesure à ultrasons dans un tube de mesure (1) entre deux convertisseurs de mesure (2,3) pour ultrasons, un oscillateur (19) pour produire un signal à haute fréquence pour un circuit d'émission (4) et pour un circuit de commande (20) pour produire des séquences S de cycles de travail successifs A_{N} ainsi que deux branches de commande (5;6) branchées en parallèle, qui sont disposées entre le circuit d'émission (4) et un circuit de mesure (7) et sont prévues pour les convertisseurs de mesure (2;3) qui sont raccordés à des prises (17;18) des branches de commande (5;6), caractérisé en ce
qu'au moins l'une des branches de commande (5 ou 6) comporte en plus d'un circuit de couplage (16;26 ou 16';26') pour le convertisseur de mesure (2 ou 3) deux déphaseurs (14; 15; 24; 25 ou 14'; 15'; 24'; 25') pouvant étre commandés par le circuit de commande (20),
qu'un premier de ces déphaseurs (14; 24 ou 14'; 24') pour l'application d'un premier déphasage α ou α', prédéterminé par le cycle de travail A_{N}, à un signal d'émission produit par un circuit d'émission (4) à partir du signal à haute fréquence, est disposé entre le circuit d'émission (4) et la prise (17 ou 18), et
qu'un second de ces déphaseurs (15; 25 ou 15'; 25') pour appliquer un second déphasage β ou β' prédéterminé par le cycle de travail A_{N} à un signal de mesure délivré par le convertisseur de mesure (2 ou 3), est inséré entre la prise (17 ou 18) et l'une des deux entrées du signal de mesure du circuit de mesure (7).

2. Débitmètre volumétrique selon la revendication 1, caractérisé en ce qu'un premier déphaseur respectif (14; 14'; 24; 24') et un second déphaseur respectif (15; 15'; 25; 25') sont disposés dans les deux branches de commande (5; 6) et que la somme du déphasage a dans le premier déphaseur (14; 24) de la première branche de commande (5) et du déphasage β' dans le second déphaseur (15'; 25') de la seconde branche de commande (6), modulo 2π est égale à la somme du déphasage a' dans le premier déphaseur (14'; 24') de la seconde branche de commande (6) et du déphasage β dans le second déphaseur (15,25) de la première branche de commande (5).

3. Débitmètre volumétrique selon la revendication 1, caractérisé en ce que les deux déphaseurs (14;15;24;25 ou 14';15';24';25') comportent, dans la même branche de commande (5 ou 6), respectivement la même valeur de déphasage α = β ou α' = β' prédéterminée par le cycle de travail A_{N}.

4. Débitmètre volumétrique selon la revendication 3, caractérisé en ce que dans l'une des deux branches de commande (5 ou 6), les deux déphaseurs (14;15;24;25 ou 14'; 15';24';25') possèdent, dans tous les cycles de travail, la même valeur prédéterminée de déphasage α = β ou α' = β'.

5. Débitmètre volumétrique selon la revendication 1, caractérisé en ce que les signaux d'émission dans les deux premiers déphaseurs (14;14' ou 24;24') et les signaux de mesure dans les seconds déphaseurs (15;15';25;25') sont soumis au même déphasage avec les valeurs α = α' et β = β'

6. Débitmètre volumétrique selon la revendication 1, caractérisé en ce que la séquence S comprend une réserve de valeurs allant de la gamme de 0° à 360° pour les déphasages α, α', β, β' des déphaseurs (14; 14'; 15; 15'; 24; 24'; 25; 25').

7. Débitmètre volumétrique selon la revendication 6, caractérisé en ce que la réserve de valeurs comprend les deux valeurs 0° et 180° pour les déphasages α, α', β, β' des déphaseurs (14; 14'; 15; 15'; 24; 24'; 25; 25').

8. Débitmètre volumétrique selon la revendication 7, caractérisé en ce que les déphaseurs (14; 14'; 15; 15') sont formés par des portes OU-Exclusif (24; 24'; 25; 25').

9. Débitmètre volumétrique selon l'une des revendications 1 à 8, caractérisé en ce que le circuit d'émission (4), le circuit de mesure (7), l'oscillateur (19), le circuit de commande (20) et les déphaseurs (14; 14'; 15; 15') ou les portes OU-Exclusif (24; 24'; 25; 25') sont simulés par programmation dans un microprocesseur (32).
